# EUROPÄISCHE PATENTSCHRIFT

(11) **EP 0 667 248 B1**
(45) Veröffentlichungstag und Bekanntmachung des Hinweises auf die Patenterteilung: **05.11.1997**
(21) Anmeldenummer: 94250171.9
(22) Anmeldetag: 02.07.1994
(51) Int. Cl.: B42D 15/00, B29C 37/00

(54) **Dokument**
Document
Document

(30) Priorität: 11.02.1994 DE 4404941
(43) Veröffentlichungstag der Anmeldung: 16.08.1995
(73) Patentinhaber: BUNDESDRUCKEREI GmbH, D-10958 Berlin (DE)
(72) Erfinder: Emmrich, Detlef, D-12159 Berlin (DE)
(74) Vertreter: Lüke, Dierck-Wilm, Dipl.-Ing.

(56) Entgegenhaltungen:
- FR-A- 2 351 800
- PATENT ABSTRACTS OF JAPAN vol. 14, no. 327 (M-0998) 24. April 1990 & JP-A-02 111 591 (FUJI PHOTO FILM)

## Beschreibung

Die Erfindung bezieht sich auf ein Dokument aus einem personalisierten Wertpapier und zwei mit diesem beidseits laminierten Folien.

Ein Dokument der gattungsgemäßen Art ist als Personalausweis bekannt, der aus einem mit Daten wie insbesondere Personaldaten und Unterschrift beschrifteten und mit einem Lichtbild versehenen Wertpapier aus Papier oder papierähnlichem Material und einer das Wertpapier vierseitig umschließenden, z.B. heißlaminierten Folienumhüllung besteht. Das Einschweißen eines solchen Personaldokumentes aus beidseits auflaminierten und am allseiten Rand verbundenen Folien dient zur Verhinderung möglicher Manipulationen an den Personaldaten, zum Verhindern des Auswechselns des Fotos und zum Schutz wieterer Sicherheitselemente. Hierbei ist es wichtig, daß alle Daten, das Lichtbild und auch alle zusätzlich eingebrachten Sicherheitselemente insgesamt in einer Folienumhüllung z.B. heißlaminiert eingeschlossen sind. Das beschriebene Dokument bzw. der beschriebene Personalausweis hat Abmessungen von etwa 10 x 7 cm.

Nun sind auch Personaldokumente wie z.B. der neue EG-Führerschein, bekannt, die bei Abmessungen von etwa 21 x 10 cm in drei Abschnitte von 10 x 7 cm unterteilt sind, wobei nur der eine Abschnitt von etwa 10 x 7 cm Personaldaten, Dienststempel, Unterschriften, ein Lichtbild und weitere Sicherheitselemente aufweist, die zur Verhinderung von möglichen Manipulationen oder auch nur zum Schutz mittels einer Folie gesichert bzw. geschützt werden sollen, so daß nicht das gesamte Personaldokument zu sichern ist. Teile des Personaldokumentes, im konkreten Fall zwei Abschnitte zu je 10 x 7 cm, sollen somit für nachträgliche Eintragungen unlaminiert bleiben. Sicherheitsrelevante Teile, wie die Seite mit den Personaldaten, den Unterschriften, dem Dienststempel, dem Lichtbild und den zusätzlichen Sicherheitselemente insbesondere Foliendurchsichtspasser, Metallisierungen, Spezialbedampfungen und -bedeckungen, thermochrome und spezielle andere Pigmentbeschichtungen, Mikrostrukturelemente, kontaktlose Chips, Mikroprozessoren sowei Sender- bzw. Empfängerelemente, um einige zu nennen, sollen aber Bestandteile der Folien sein oder durch Folien geschützt werden. Die Möglichkeit, die Lichtbildseite des EG-Führerscheins mit einer Einzelblattfolie abzudecken, scheitert daran, daß sich das Folienblatt im täglichen Gebrauch durch Walkbewegungen vom Material des Führerscheins ablösen kann. Sie ermöglicht jedoch kein langlebiges Dokument, wie z.B. einen EG-Führerschein.

Es besteht die Gefahr, daß beim Auflaminieren von Folien auf den einen Abschnitt des Personaldokumentes in der Randzone, d.h. im Übergang zu einem weiteren Abschnitt des Personaldokumentes, die Folie nicht manipulationssicher mit dem Trägermaterial des Wertpapieres verbunden werden kann.

Der Erfindung liegt von daher die Aufgabe zugrunde, ein Dokument der gattungsgemäßen Art zu schaffen, das auch nur in Teilbereichen seiner Fläche mittels laminierter Folien manipulationssicher abgedeckt werden kann.

Zur Lösung dieser Aufgabe sieht die Erfindung vor, daß die Fläche des Wertpapieres größer ist als die Fläche der beidseits desselben auflaminierten Folien und daß an der mindestens einen Randzone der Folien durchgehende Öffnungen im Wertpapier angeordnet und die Folien durch die Öffnungen hindurch mittels Folienstegen miteinander fest verbunden sind. Neuerungsgemäß wird somit auch in der Randzone, d.h. im Übergang der Folien zu einer nicht bedeckten Oberfläche des Wertpapiers eine sichere Fixierung der laminierten Folien mittels der Folienstege erreicht, da die Folien durch die Öffnungen hindurch mittels der Folienstege sicher miteinander verbunden bzw. laminiert sind.

In bevorzugter Ausführung der Erfindung sind die Öffnungen als Schlitze ausgebildet, die insbesondere als kleine Fensterschlitze aus dem Wertpapier ausgestanzt sind und durch welche hindurch sichergestellt wird, daß ein ausreichender Verbund von Ober- und Unterlaminat bzw. von oberer und unterer Folie entsteht.

In einer bevorzugten Ausführungsform schließen die Folien einen Endbereich eines langgestreckten, schmalen Wertpapieres (Personaldokument in Form eines EG-Führerscheines) dreiseitig nach Art einer Folienumhüllung ein und sind an den freien Rändern des Wertpapieres und an der Randzone der Folien durch die Öffnungen hindurch mittels der Folienstege miteinander fest verbunden bzw. laminiert. Hierbei wird eine dreiseitig umschlossene Folienumhüllung vorgebildet. Die Öffnungen werden in Form der Fensterschlitze in das Wertpapier eingebracht. Nach dem Einstecken des zu schützenden Abschnittes des Wertpapieres in die Folienumhüllung werden die Ausstanzungen von der Folienumhüllung abgedeckt. Beim anschließenden Laminiervorgang werden dann durch die ausgestanzten Fensterschlitze hindurch die Oberfolie und die Unterfolie bzw. das Ober- bzw. Unterlaminat der Folienumhüllung so miteinander verbunden, so daß ein sicherer Halt der beiden Folien der Folientasche auf beiden Seiten des gesicherten Abschnittes erzielt wird. Manipulationen an einem derart gesicherten Dokument müssen so zu erkennbaren Spuren führen.

Das erfindungsgemäße Dokument dient im wesentlichen zur Absicherung der neuen EG-Führerscheine sowie im Bereich von wert- und sicherheitsrelevanten Druckprodukten, bei denen es darauf ankommt, nur Teile des Dokumentes zu schützen.

Die Erfindung ist nachfolgend anhand eines in den Zeichnungen dargestellten Ausführungsbeispieles eines Personaldokumentes in Form eines EG-Führerscheines näher erläutert. Es zeigen:
- Fig. 1: eine Draufsicht auf die Innenseite des aufgeklappten, dreiteiligen EG-Führerscheines, und
- Fig. 2: einen Schnitt gemäß der Linie II-I in Fig. 1 in vergrößerter Darstellung.

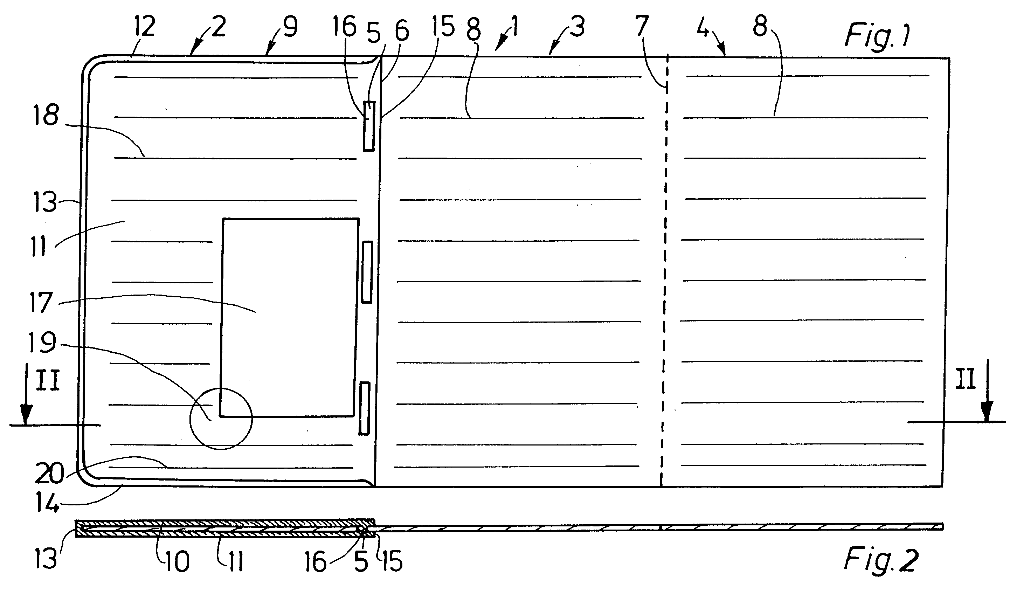

Das Dokument in Form eines EG-Führerscheines besteht aus einem Wertpapier 1 der Flächenabmessungen 21 x 10 cm, das in drei Abschnitte 2,3,4 unterteilt ist, die jeweils Flächenabmessungen von etwa 10 x 7 cm aufweisen. Das Wertpapier 1 weist zwischen den einzelnen Abschnitten zwei bis vier Knicklinien 6, 7 auf und kann somit auf die Fläche von etwa 10 x 7 cm zusammengefaltet werden. Die in Fig. 1 rechts dargestellten Abschnitte 3 und 4 sind mit prinzipiell angedeuteten Schriftfeldern 8 versehen, die für nachträgliche Eintragungen freibleiben müssen. Somit sind die Abschnitte 3 und 4 nicht in Folien einlaminiert.

Der in Fig. 1 links dargestellte Abschnitt 2 trägt auf seiner nicht dargestellten Außenseite Angaben über die Art des Dokumentes, hier Führerschein der europäischen Gemeinschaften mit einer laufenden Kontrollnummer und Übersetzungen des Wortes Führerschein in die verschiedenen europäischen Sprachen sowie dem Kennzeichen D und auf der in Fig. 1 dargestellten Innenseite maschinenschriftlich eingesetzte Personaldaten 18, ein aufgeklebtes Lichtbild 17, ein Dienstsiegel 19 und die Unterschriften 20 der ausstellenden Dienststelle und des Inhabers des Dokumentes. Dieser Abschnitt 2 bedarf zur Verhinderung möglicher Manipulationen der Absicherung durch eine Folienumhüllung 9.

Die Folienumhüllung 9 besteht aus zwei den Abschnitt 2 des Wertpapieres 1 umschließenden, auflaminierten Folien 10,11, die an den drei freien Rändern 12,13 und 14 miteinander fest verbunden sind. Im Bereich der Randzone 15 der Folien 10,11, welche Randzone 15 in etwa mit der Knicklinie 6 zusammenfällt, sind im Bereich des Abschnittes 2 drei Öffnungen 16 als kleine längliche Fensterschlitze ausgestanzt, durch welche hindurch die obere und untere Folie 10,11 bzw. das Ober- und Unterlaminat der Folienumhüllung 9 mittels eine Foliensteges 5 fest miteinander verbunden bzw. heißlaminiert sind. Auf diese Weise ist auch im Bereich der Randzone 15 der Folien 10,11 eine feste Verbindung der Folien 10,11 miteinander gewährleistet, so daß auch ein sicherer Halt der Folien 10,11 am Wertpapier 1 des Dokumentes sichergestellt ist. Manipulationen in diesem Bereich müssen somit zu erkennbaren Spuren führen.

In der Herstellung des EG-Führerscheins schließen die Folien 10,11 einen Endbereich des langgestreckten, schmalen Wertpapieres 1 (Personaldokument in Form eines EG-Führerscheines) dreiseitig nach Art einer Folienumhüllung 9 ein und sind an den freien Rändern 12,13,14 des Wertpapieres 1 und an der Randzone 15 der Folien 10,11 durch die Öffnungen 16 hindurch mittels der Folienstege 5 miteinander fest verbunden bzw. laminiert. Hierzu wird eine dreiseitig umschlossene Folienumhüllung 9 vorgebildet. Die Öffnungen 16 werden in Form der Fensterschlitze in das Wertpapier 1 eingebracht. Nach dem Einstecken des zu schützenden Abschnittes 2 des Wertpapieres 1 in die Folienumhüllung 9 werden die ausgestanzten Öffnungen 16 von den Folien 10,11 der Folienumhüllung 9 abgedeckt. Beim anschließenden Laminiervorgang werden dann durch die ausgestanzten, fensterschlitzartig gebildeten schmalen Öffnungen 16 hindurch die Oberfolie und die Unterfolie 10 bzw.11 bzw. das Ober- bzw. Unterlaminat der Folienumhüllung 9 so miteinander verbunden, so daß ein sicherer Halt der beiden Folien 10,11 der Folienumhüllung 9 auf beiden Seiten des gesicherten Abschnittes 2 erzielt wird. Manipulationen an einem derart gesicherten Dokument müssen so zu erkennbaren Spuren führen.

## Patentansprüche

1. Dokument aus einem personalisierten Wertpapier und zwei mit diesem beidseits laminierten Folien,
**dadurch gekennzeichnet,** daß die Fläche des Wertpapieres (1) größer ist als die Fläche der beidseits des Wertpapieres (1) angeordneten Folien (10,11) und daß an der mindestens einen Randzone (15) der Folien (10,11) durchgehende Öffnungen (16) im Wertpapier (1) angeordnet und die Folien (10,11) durch die Öffnungen (16) hindurch mittels beim Laminieren gebildeter Folienstege (5) miteinander fest verbunden sind.

2. Dokument nach Anspruch 1, dadurch gekennzeichnet, daß die Öffnungen (16) als schmale, lange Schlitze ausgebildet sind.

3. Dokument nach einem der Ansprüche 1 oder 2, dadurch gekennzeichnet, daß die Folien (10,11) einen Abschnitt (2) eines schmalen, langgestreckten Wertpapieres (1) dreiseitig nach Art einer Folienumhüllung (9) einschließen und an den freien Randbereichen (12,13,14) des Wertpapieres (1) und an der Randzone (15) der Folien (10,11) durch die Öffnungen (16) hindurch mittels Folienstegen (5) miteinander fest durch Laminieren verbunden sind.

## Claims

1. A document consisting of a personalised security document and two films laminated therewith on either side,
**characterised in that** the area of the security document (1) is larger than the area of the films (10, 11) disposed on either side of the security document (1), and in that at the at least one edge zone (15) of the films (10, 11) through-apertures (16) are provided in the security document (10) and the films (10, 11) are securely connected to one another through the apertures (16) by means of film webs (5) formed during lamination.

2. A document according to Claim 1,
**characterised in that** the apertures (16) are constructed as narrow, long slits.

3. A document according to one of Claims 1 or 2,
**characterised in that** the films (10, 11) enclose a portion (2) of a narrow oblong security document (1) on three sides in the manner of a film covering (9) and at the free edge regions (12, 13, 14) of the security document (1) and at the edge zone (15) of the films (10, 11) are securely connected to one another through the apertures (16) by laminating by means of film webs (5).

## Revendications

1. Document constitué d'un papier officiel personnalisé et de deux feuilles lamifiées sur les deux faces de ce dernier, caractérisé en ce que la superficie du papier officiel (1) est supérieure à la superficie des feuilles (10, 11) disposées sur les deux faces du papier officiel (1), et en ce que des ouvertures (16) traversant le papier officiel (1) sont disposées sur une zone de bordure (15) au moins présente dans les feuilles (10, 11), et les feuilles (10, 11) sont solidement reliées l'une à l'autre à travers les ouvertures (16), au moyen de languettes de feuille (5) formées lors de la lamification.

2. Document selon la revendication 1, caractérisé en ce que les ouvertures (16) sont configurées comme longues fentes étroites.

3. Document selon l'une des revendications 1 ou 2, caractérisé en ce que les feuilles (10, 11) enferment sur trois côtés, à la manière d'une enveloppe en feuille (9), une partie (2) d'un papier officiel (1) étroit allongé, et sur les régions de bordure libres (12, 13, 14) du papier officiel (1) et sur la zone de bordure (15), des feuilles (10, 11), elles sont reliées solidement l'une à l'autre par lamifcation à travers les ouvertures (16), au moyen de languettes de feuille (5).
